# EUROPEAN PATENT APPLICATION

(11) **EP 1 732 294 A1**
(43) Date of publication of application: **13.12.2006**
(21) Application number: 06251748.7
(22) Date of filing: 30.03.2006
(51) Int. Cl.: H04M 1/247, H04M 1/82

(54) **Voice activated phone mute reminder method and apparatus**

(30) Priority: 08.06.2005 US 148717
(71) Applicant: AVAYA TECHNOLOGY LLC, Basking Ridge, NJ 07920 (US)
(72) Inventor: Runcie, Peter D., Bigola Plateau, NSW 2107 (AU)
(74) Representative: Williams, David John

(57) **Abstract**

A mute feature selection reminder for use in connection with a communication device is provided. The mute feature selection reminder is activated in response to the detection of a voice signal local to the communication device while the mute feature of a communication device is activated. The mute feature selection reminder may comprise an output in the form of a visual indicator and/or an audible indicator.

## Description

### FIELD OF THE INVENTION

The present invention is related to providing a reminder of a mute selection to a user of a telephony device. In particular, the present invention is directed to providing a reminder of a mute feature selection in response to detecting a voice signal.

### BACKGROUND OF THE INVENTION

Telephony devices often provide a mute selection feature. The mute selection feature allows the user of a telephony device, such as a telephone or video telephone, to deactivate the microphone on the local device. Accordingly, by activating the mute signal, a user can conduct private conversations while continuing to receive audio signals from other telephony endpoints that are parties to a call. The mute function can also be selected so that typing, rustling papers or other noises are not transmitted to other endpoints. Although typically used in conjunction with a speakerphone function, many telephones also allow muting of a handset microphone through selection of a mute feature.

The selection of a mute feature is usually accomplished by pressing a mute feature button on the user's telephone. Selection of the mute feature button typically deactivates the speaker phone microphone and/or handset microphone of the user's telephony device. In addition, a static indicator light is activated while the mute feature is on.

Oftentimes, participants in telephone conferences activate the mute feature in order to conduct private sidebar conversations. The mute feature may also be selected in order to avoid adding extraneous noise to a conference call. While the mute feature is activated on a communication device, the user or users of that communication device are still able to hear the voices of other parties contributing to the conference call. However, it is not uncommon for such a user to forget that the mute feature has been activated when that user is asked a question or that user decides to make a comment. As a result, a user may speak, intending to add comments to the telephone conference, without unmuting the phone. This problem is particularly prevalent during conference calls where most participants have their phones on mute.

Voice activated devices have been used in various context. For example, voice activated audio recorders are available for conserving storage space for voice data. In addition, voiceover IP (VoIP) telephony devices often do not send data packets if it is determined that a user of the device has not spoken in order to conserve bandwidth. However, it would not be desirable to simply deselect a mute feature in response to the detection of voice or other audible signals, as doing so would make the mute selection feature incapable of performing its primary function, which is to prevent conversations or other noise at an endpoint from being transmitted to other endpoints of a call.

### SUMMARY OF THE INVENTION

The present invention is directed to solving these and other problems and disadvantages of the prior art. In accordance with embodiments of the present invention, a mute feature selection reminder is generated in response to the detection of a voice signal at a telephony endpoint on which a mute feature has been activated. The mute feature selection reminder may be in addition to a mute feature selection indicator that is activated upon selection of the mute feature.

In accordance with embodiments of the present invention, the mute selection reminder comprises a flashing light that activates in response to the detection of speech at the communication device while the mute feature is activated. In accordance with still other embodiments of the present invention, the mute selection reminder may comprise an indicator light that is in addition to a mute feature selection indicator light. In accordance with still other embodiments of the present invention, the mute feature selection reminder may comprise an audible reminder. In accordance with still other embodiments of the present invention, the mute feature selection reminder may include both visual and audible indications.

Additional features and advantages of embodiments of the present invention will become more readily apparent from the following description, particularly when taken together with the accompanying drawings.

### BRIEF DESCRIPTION OF THE DRAWINGS

Fig. 1 depicts a telephony device in accordance with embodiments of the present invention;
Fig. 2 depicts components of a telephony device in accordance with embodiments of the present invention; and
Fig. 3 is a flowchart illustrating aspects of the operation of a telephony device mute feature selection reminder in accordance with embodiments of the present invention.

### DETAILED DESCRIPTION

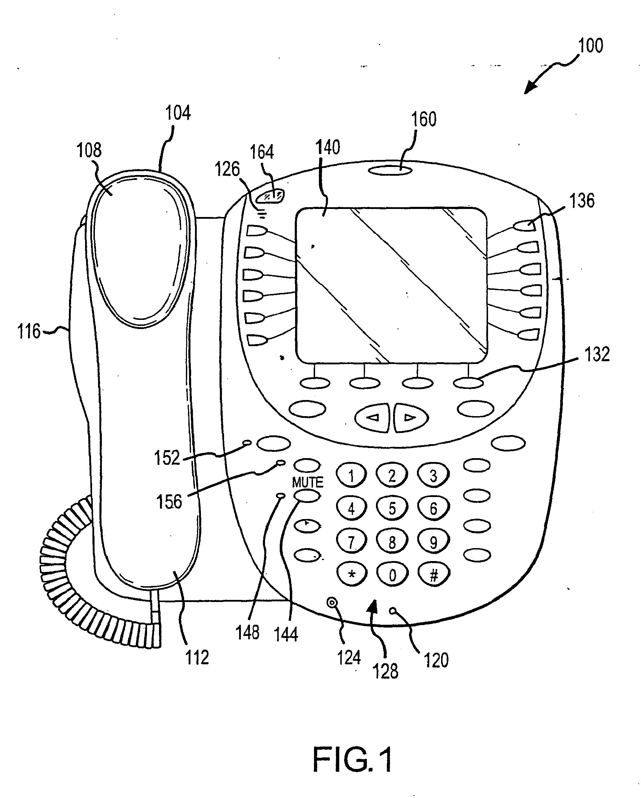

The present invention is generally directed to providing a reminder of a mute feature selection in response to detecting a voice signal at an endpoint on which a mute feature has been activated. With reference now to Fig. 1, a telephony device 100 in accordance with embodiments of the present invention is illustrated. In particular, a telephony device 100 comprising a voice telephone is illustrated. However, embodiments of the present invention are not so limited. For example, a communication device 100 may additionally comprise a video telephone, soft telephone, or soft video telephone.

The exemplary communication device 100 generally includes a handset 104 that incorporates a speaker 108 and a microphone 112. In addition, a speaker 116 and microphone 120 are provided for hands free (*i.e.,* speakerphone) operation. A communication device 100 may additionally comprise a headset jack 124 for enabling hands free operation in connection with use of a headset. A mute feature selection reminder audio transducer 126 may also be provided.

The telephony device 100 may also provide a numeric keypad 128, soft keys 132 and line/feature buttons 136. In general, the soft keys 132 and line/feature buttons 136 are used in connection with application specific features and can have variable functions, generally indicated by a label presented by a visual display 140. The telephony device 100 may also provide dedicated feature buttons, including a mute feature button 144, that allows a user to deactivate or disable the provision of audio signals picked up by a microphone, such as the handset microphone 112, speakerphone microphone 120 or a microphone provided as part of a headset, to prevent the transmission of voice signals or noise from the communication device 100 to any other communication devices with which the communication device 100 is engaged in a call.

The display 140, in an exemplary embodiment, comprises a liquid crystal or other type of visual display capable of presenting messages and information to a user. Such information may include information related to the status of the communication device 100 and labels associated with the soft keys 132 and line/feature keys 136. In accordance with embodiments of the present invention in which the communication device 100 comprises a video telephone, the display 140 may also operate to display images from one or more endpoints with which the communication device 100 is engaged in a video call.

The communication device 100 may additionally include various visual indicators. Such indicators may include a mute feature selection light or lamp 148 that may light when the speakerphone microphone 120, handset microphone 112, and/or headset microphone is muted such that other parties to a call are prevented from hearing audible signals from the location of the communication device 100. Other visual indicators may include a speakerphone selection lamp 152 that may light when the speakerphone function is selected, a headset function lamp 156 that may light when the headset is active, and a message waiting lamp 160 that may be illuminated when there is a message waiting on the user's voice mail. A mute feature selection reminder lamp 164 may also be provided. As used here, a light or lamp is not limited to any particular technology for providing a visual output. Furthermore, a light or lamp may light steadily and/or may be pulsed or flashed. Accordingly, examples of lights or lamps include light emitting diodes (LEDs) and incandescent lamps.

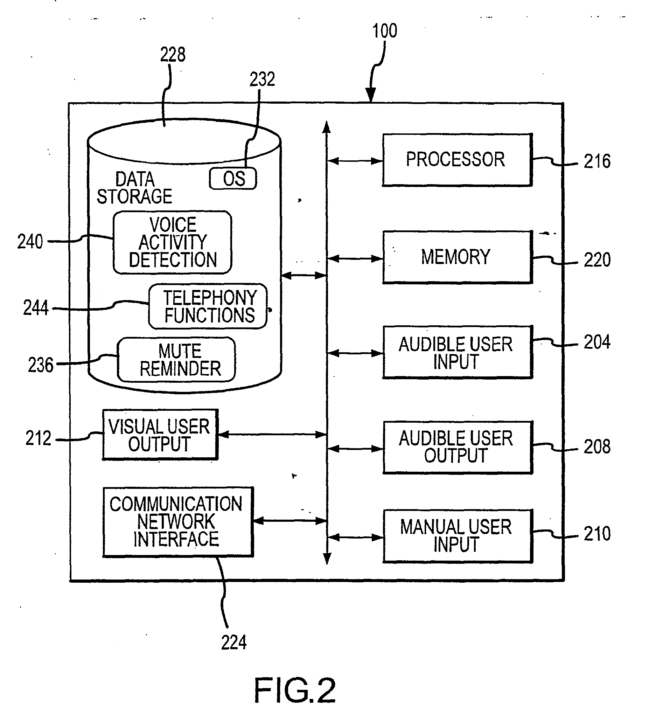

With reference now to Fig. 2, components that may be included as part of a communication device 100 are depicted in block diagram form. Such components may include one or more audible user inputs 204, such as the handset microphone 112, speakerphone microphone 120, or a microphone provided as a headset. One or more audible user outputs 208 may also be provided. Examples of audible user outputs 208 include the handset speaker 108, speakerphone speaker 116, and a speaker provided as part of a headset. Additional examples of audible user outputs 208 include any additional audio transducers that may be provided, for example in connection with an audible ringer for indicating an incoming call, audible transducers for confirming feature selections, or an audio transducer 126 providing a mute feature selection reminder. As can be appreciated by one of skill in the art from the description provided herein, an audible user output 208 may provide more than one function. As an illustrative example, the speakerphone speaker 116 may, in addition to providing an output comprising a voice signal from another endpoint to a call, provide a ringer function to indicate an incoming call, and/or provide an audible output comprising a mute feature selection reminder. Accordingly, a dedicated mute feature selection audio transducer 126 need not be included in order to provide an audible mute feature selection reminder.

One or more manual user inputs 210 may be included as part of the communication device 100 for receiving input from a user. Examples of manual user inputs 210 include keys or buttons provided as part of a numeric keypad 128, as soft keys 132, as line/feature buttons 136, or a mute feature button 144. Furthermore, manual user inputs 210 may enable a user to perform various functions, such as activating or deactivating a mute feature by pressing a mute feature button 144 or another user input, such as a soft key 132 operating as a mute feature button.

The communication device 100 may also include one or more visual user outputs 212. Such visual user outputs may include visual output provided by a display 140 and/or by indicator lamps such as lamps 148, 152 and 160. Another example of a visual user output 212 is a mute feature selection reminder lamp 164. As can be appreciated by one of skill in the art from the description provided herein, a visual user output 212 may be used in connection with more than one function. For example, a visual mute feature selection reminder may be provided a textual message provide by a display 140 or by flashing an indicator lamp 148, 152, 156 or 160 that is also used for another purpose. That is, a dedicated mute feature selection reminder lamp 164 need not be included in order to provide a visual mute feature selection reminder.

A processor 216 may be provided to run programming code implementing various functions performed by the communication device 100 including functions associated with providing a mute feature selection reminder. In accordance with embodiments of the present invention, such functions may additionally include performing voice detection in connection with the mute feature selection reminder function. The processor 216 may include any general purpose programmable processor or controller 204 for executing application or operating system programming or instructions. Alternatively, the processor 216 may comprise a specially configured application specific integrated circuit (ASIC). Memory 220 may also be provided for use in connection with the execution of the programming by the processor 216, and for the temporary or long term storage of data or program instructions. Memory 220 may comprise solid state memory, such as DRAM or SDRAM. Where the processor 216 comprises a controller, the memory 220 may be integral to the processor 216.

A communication network interface 224 interconnects the communication device 100 to a communication network. For example, where the communications device 100 comprises an IP telephone, implemented either as a stand alone device or as a soft phone function provided in connection with a general purpose computer, the communication network interface 224 may comprise an Ethernet interface.

Data storage 228 may be included for storing programming or data. For example, the data storage 228 may store operating system instructions 232. Applications that may be stored in data storage 228 include a mute feature selection reminder application 236, a voice activity detection application 240, and telephony function applications 244. The data storage 228 may include magnetic storage devices, solid state storage devices, optical storage devices, logic circuits, or any combination of such devices. It should further be appreciated that the programs or data that may be maintained in the data storage 228 can comprise software, firmware or hard wired logic, depending on the characteristics of the data storage 228. In addition, various functions and applications may be integrated with one another and/or provided separately.

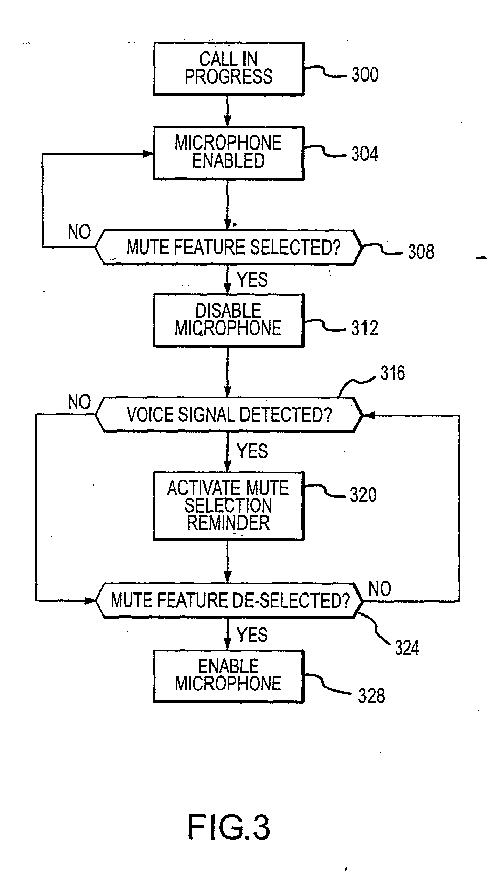

With reference now to Fig. 3, aspects of the operation of a communication device 100 incorporating or providing a mute feature selection reminder function in accordance with embodiments of the present invention are illustrated. Initially, at step 300, a call is in progress. As shown at step 304, while a call is in progress, a microphone (*e.g*. a handset microphone 112, speakerphone microphone 120, a microphone provided as part of a headset, or other audible user input 204) is enabled. As used herein, a microphone is described as being enabled when audible signals local to the communication device 100 are detected by the microphone and those audible signals are transmitted to the other communication device or devices that are party to the call in progress.

At step 308, a determination is made as to whether a mute feature of the communication device 100 has been selected. For example, in accordance with embodiments of the present invention, a mute feature may be selected by hitting the mute function button 144. If it is determined that the mute feature has not been selected, the process returns to step 304, and the microphone continues to be enabled.

If the mute feature has been selected, the microphone is disabled (step 312). As used herein, disabling a microphone generally comprises disabling the transmission or provision of audible signals local to the communication device 100 that are picked up by a microphone associated with the communication device 100 to the other communication device or devices with which the communication device 100 is engaged in a call. As can be appreciated by one of skill in the art, a mute feature may be selected by the user of a communication device 100 so that the user can conduct private conversations with another person at the location of the communication device 100. A mute feature may also be selected by the user of a communication device 100 to prevent noise, such as noise from typing, the rustling of papers, or other ambient noise, from interfering with audible information being provided by a user of another communication device. In general, while a mute feature is enabled, an indication of such status may be provided by the user, for example through the illumination of a mute indicator lamp 144. Alternatively or in addition, a mute selection message may be displayed by the display 140.

At step 316, a determination may be made as to whether a voice signal is detected at the location of the communication device 100. Detection of a voice signal may comprise operation of a voice activity detector implemented by instructions executed by the processor 216. As can be appreciated by one of skill in the art, voice activity detectors are known, for example in connection with IP telephones in order to conserve bandwidth. More particularly, voice activity detectors such as may be used to suppress the sending of packets that do not contain voice data can be used in connection with the detection of a voice signal to provide a mute feature selection reminder.

In accordance embodiments of the present invention, the voice activity detection function is performed in connection with the receipt of voice information local to the communication device 100 by an audible user input 204. For example, a handset microphone 112, speakerphone microphone 120, or a microphone provided as part of a headset may be used to provide audible information collected from the location of the communication device for analysis by a voice activity detection application 248 running on the processor 216. Furthermore, it should be appreciated that an audible user input 204 may be operative to provide such a signal for analysis by a voice activity detection application 248 or function, even while the mute feature is activated and preventing such audible information from being transmitted to the other communication device or devices associated with a call (*i.e.,* while the selection of the mute feature has disabled the audible user inputs 204). Moreover, it should be appreciated that voice signals that may be received by the communication device 100 from another communication device over a telephony channel as part of an in-progress call are not used to determine whether a voice signal is present for purposes of activating the mute selection reminder.

If a voice signal local to the communication device 100 is detected, a mute feature selection reminder is activated (step 320). The mute feature selection reminder may be provided in various ways, using one or more outputs. For example, the mute feature selection reminder may comprise operating the mute feature selection lamp 148 in a flashing mode. Alternatively or in addition, other indicator lamps, such as the message waiting lamp 160 may be flashed or illuminated to provide a reminder to the user that the mute feature has been selected. As yet another alternative, a dedicated mute feature selection reminder lamp 164 may be illuminated, either steadily or in a flashing mode. A display 140 may be used to display a textual message or otherwise provide a mute selection reminder. As still another example, various provided visual outputs 212 may be operated in combination, for example in a coordinated fashion, to visually alert and remind the user that the mute feature has been selected. In accordance with still other embodiments of the present invention, one or more audible user outputs 208 may be used to provide a reminder to the user that the mute feature has been selected. For example, an audible user output 208, such as the speakerphone speaker 116, may be used to provide a beep, tone or voice reminder that the mute feature has been selected. In accordance with still other embodiments of the present invention, one or more audible user outputs 208 may be used in combination with one or more visual user outputs 212 to provide a mute feature selection reminder to the user. As can be appreciated by one of skill in the art from the description provided herein, a mute feature selection reminder in accordance with embodiments of the present invention can assist in preventing a user from attempting to provide comments or other audible input as a participant in a call while the mute feature is selected.

After activating a mute feature selection reminder at step 320, or after determining at step 316 that a voice signal has not been detected, a determination may be made as to whether the mute feature has been deselected (step 324). If the mute feature has not been deselected, the process may return to step 316, and the microphone (*i.e.,* the audible user inputs 204) may continue to be disabled. If the mute feature has been deselected, the microphone (i. e., the applicable audible user input or inputs 204) may be enabled (step 328).

In addition, it can be appreciated from the present disclosure that embodiments of the present invention do not automatically disable the mute feature in response to detection of a voice signal. That is, embodiments of the present invention do not interfere with one purpose of a mute feature provided as part of a communication device 100, which is to enable private, sidebar conversations, while a call is in progress.

The foregoing discussion of the invention has been presented for purposes of illustration and description. Further, the description is not intended to limit the invention to the form disclosed herein. Consequently, variations and modifications commensurate with the above teachings, within the skill or knowledge of the relevant art, are within the scope of the present invention. The embodiments described hereinabove are further intended to explain the best mode presently known of practicing the invention and to enable others skilled in the art to utilize the invention in such or in other embodiments and with the various modifications required by their particular application or use of the invention. It is intended that the appended claims be construed to include alternative embodiments to the extent permitted by the prior art.

## Claims

1. A method for providing a mute selection reminder, comprising:
detecting selection of a mute feature on a first communication device;
after said detecting selection of a mute feature, detecting a local voice signal at said first communication device; and
in response to said detecting a local voice signal at said first communication device, generating a mute feature selection reminder.

2. The method of Claim 1, further comprising:
in response to said detecting selection of a mute feature, disabling a microphone associated with said first communication device.

3. The method of Claim 2, wherein said disabling a microphone comprises preventing a signal generated by said microphone from being transmitted to a second communication device.

4. The method of Claim 1, wherein said detecting a voice signal at said first communication device includes:
receiving through a microphone on said first communication device an audible signal; and
analyzing said audible signal, wherein said audible signal is determined to be a voice signal.

5. The method of Claim 1, wherein said generating a mute feature selection reminder comprises activating a visual mute selection reminder.

6. The method of Claim 1, wherein said generating a mute feature selection reminder comprises activating an audible mute selection reminder.

7. The method of Claim 1, further comprising:
detecting deselection of said mute feature on said first communication device; and
activating said microphone in response to detecting deselection of said microphone mute feature, wherein said mute feature is not deselected in response to said detecting a local voice signal.

8. A mute feature selection reminder device, comprising:
means for receiving audible information;
means for selecting a mute feature;
first means for indicating selection of said mute feature;
means for disabling transmission of audible information in response to selection of said mute feature;
means for detecting local audible information comprising a voice signal; and
second means for indicating selection of said mute feature, wherein said second means for indicating selection of said mute feature is activated in response to selection of said mute feature and detection of audible information comprising a voice signal.

9. The device of Claim 8, wherein said mute feature reminder device is provided as part of a communication endpoint means.

10. The device of Claim 8, wherein said first means for indicating selection of said mute feature comprise first means for providing a visual output operated in a first mode, and wherein said second means for indicating selection of said mute feature comprises said first means for providing a visual output operated in a second mode.

11. The device of Claim 18, wherein said first means for indicating selection of said mute feature comprise first means for providing an output, and wherein said second means for indicating selection of said mute feature comprises a second means for providing an output that is separate from said first means for providing an output.
